# EUROPEAN PATENT SPECIFICATION

(11) **EP 2 995 672 B1**
(45) Date of publication and mention of the grant of the patent: **11.07.2018**
(21) Application number: 14794452.4
(22) Date of filing: 09.04.2014
(51) Int. Cl.: C10G 55/06, B01J 37/10, C10G 33/04, C10G 11/18, B01D 17/04, C10L 1/02, C10B 53/02, C10G 3/00, B01J 29/08, B01J 29/40

(54) **METHOD FOR MODIFYING BIOMASS PYROLYSIS OIL**
VERFAHREN ZUR MODIFIZIERUNG VON BIOMASSEPYROLYSEÖL
PROCÉDÉ DE MODIFICATION D'UNE HUILE DE PYROLYSE DE BIOMASSE

(30) Priority: 07.05.2013 CN 201310163449
(43) Date of publication of application: 16.03.2016
(73) Proprietor: Wuhan Kaidi Engineering Technology Research Institute Co., Ltd., Wuhan, Hubei 430223 (CN)
(72) Inventor: WANG, Dashan, Wuhan Hubei 430212 (CN); SONG, Dechen, Wuhan Hubei 430212 (CN); LIU, Qianqian, Wuhan Hubei 430212 (CN); ZHENG, Shenke, Wuhan Hubei 430212 (CN); ZHAN, Xiaodong, Wuhan Hubei 430212 (CN); JIN, Jiaqi, Wuhan Hubei 430212 (CN); ZHANG, Yanfeng, Wuhan Hubei 430212 (CN)
(74) Representative: Zeuner Summerer Stütz
(86) International application number: PCT/CN2014/074975
(87) International publication number: WO 2014/180212

(56) References cited:
- EP-A1- 2 325 281
- CN-A- 101 885 986
- CN-A- 102 712 850
- CN-A- 103 215 068
- US-A- 4 639 308
- US-A- 4 797 214
- US-A- 5 504 259
- US-A1- 2012 203 044
- US-A1- 2013 023 710
- PAUL T. WILLIAMS ET AL.: 'The Influence of Catalyst Type on the Composition of Upgraded Biomass Pyrolysis Oils' THE JOURNAL OF ANALYTICAL AND APPLIED PYROLYSIS vol. 31, 31 December 1995, pages 39 - 61, XP055292674 DOI: 10.1016/0165-2370(94)00847-T

## Description

### TECHINICAL FIELD

The invention relates to a method for modifying bio-oil derived from biomass pyrolysis, more particularly to a process to produce fuel oil via direct catalytic cracking of bio-oil derived from biomass pyrolysis after dehydration.

### DESCRIPTION OF RELATED ART

Fossil energy, such as petroleum, coal carbon, and natural gas becomes increasingly scarce. Biomass energy is the fourth major energy behind the above three fossil energies, and biomass energy has advantages of wide range of sources, security, recyclability, zero carbon dioxide emission, etc. Sources of biomass including crops, woods, other plants and straw etc. Biomass, after a series of transformation, can be used to produce different types of energy fuels, for example, biomass after carbonization can be used to produce high-quality solid fuel; biomass after gasification can be used to produce gas fuel; biomass after liquefaction can be used to produce liquid fuel, etc. As the biomass is directly transformed into the liquid fuel, the low-quality, low calorific value biomass energy is transformed to a liquid fuel featuring high quality, high calorific value, and storage and transport convenience. Bio-oil derived from biomass pyrolysis after modification and refinement can be employed as a replacement for fossil fuel.

The biomass pyrolysis technology is to fast heat the biomass under anaerobic condition, and the chemical bond of the biomass macromolecule is cut by the thermal energy to be substances with low molecular weight. Since 1980s, the biomass pyrolysis technologies have been developing rapidly, and various kinds of the technologies have been developed, such as entrained flow reactor developed by Georgia Institute of Technology, vortex reactor by Solar Energy Research Institute (SERI), fluidized bed reactor by DynaMotive Energy System from Canada, upflow circulating fluidized bed reactor by ENSYN, and rotating cone reactor by University of Twente in Netherland and BTG, etc. Among which, the BTG in Netherland and the DynaMotive Energy Systems in Canada have built industrial demonstration apparatuses for pyrolysis to daily process 30 t palm shells, and 100 t sawdusts, respectively, with an oil yield being above 60% (weight percentage). However, three major components of the biomass: cellulose, hemicelluloses and lignin cannot realize complete synchronization during pyrolysis, and the pyrolysis process cannot achieve thermodynamic equilibrium, meanwhile, the product composition is complex. Among the composition, water accounts for the most as a single component in bio-oil derived from biomass pyrolysis, and is between 30% and 40% of the bio-oil derived from biomass pyrolysis. Water is brought by raw materials, and is produced by polycondensation process of biomass pyrolysis. Moreover, the biomass pyrolysis oil contains hundreds and thousands kinds of organic chemicals, such as acid, alcohol, ether, ester, aldehyde, ketone, and phenol etc., causing the bio-oil derived from biomass pyrolysis to feature high oxygen content, high acidity, high viscosity, low calorific value and extremely unstable physical and chemical properties, wherein high oxygen content can cause the viscosity of the bio-oil derived from biomass pyrolysis to increase with the storage time; phenols therein is easy to be oxidized as the temperature gets higher, and causes the bio-oil to agglomerate and cure; the high acidity of the biomass pyrolysis oil tends to corrode the apparatus during storage and using. Therefore, the bio-oil derived from biomass pyrolysis cannot be widely applied as fuels, and modification and refinement are needed to improve the quality of the bio-oil derived from biomass pyrolysis and to meet the quality requirements of liquid fuel.

CN1376766 disclosed a method to modify the bio-oil derived from biomass pyrolysis by hydrogenation. To be specific, a CoMo hydrocatalyst is employed in the environment of 10 megapascal and above 350°C to hydrogenate the bio-oil derived from biomass pyrolysis and remove the oxygen therein, thereby yielding a modified bio-oil. Although hydrogenation is the most effective way to remove oxygen, the oxygen content in the bio-oil derived from biomass pyrolysis is above 40%, so a large amount of hydrogen is needed thereto. Because the hydrogenation is demanding and the apparatus thereof is complex and costs a lot, hydrogenating the biomass pyrolysis oil is inapplicable in industrial production.

CN101381611 disclosed a method for modifying biomass pyrolysis oil by esterification and etherification. To be specific, a low carbon alcohol is added in the bio-oil derived from biomass pyrolysis without water removal, and is esterified and etherfied for 5-8 hours under 90-110°C. Then the reactant is distilled and the pressure thereof is reduced to remove water under 80-130°C. The water content of the biomass pyrolysis oil in this invention is 20-30%, and large amount of water can make a difficult esterification. In addition, the temperature of esterification and distillation are both above 80°C, thereby obviously accelerating the aging rate, separating out a large amount of solid particles, and reducing the stability thereof.

CN101899334A disclosed a method for modifying bio-oil derived from biomass pyrolysis by discharging water and then esterification. To be specific, isooctyl alcohol and water are added in the bio-oil derived from biomass pyrolysis to form an azeotrope, and then most of the water is distilled under 0.02 megapascal and 80°C water bath with the pressure reduced. Acetyl chloride is added in the dehydrated biomass pyrolysis oil to remove water by a hydrolysis thereof. The anhydrous bio-oil derived from biomass pyrolysis reacts with ethanol, and small amount of water produced by the esterification is removed by an anhydrous magnesium sulfate so as to discharge water and acidity. The acetyl chloride is employed to remove water in the biomass pyrolysis oil, however, the consumption of acetyl chloride brings much costs. In addition, anhydrous magnesium sulfate is added after the esterification, thus the magnesium sulfate needs to be separated afterwards, thereby bringing a difficult process and a loss of biomass pyrolysis oil in the modification process.

Existing methods for modifying biomass pyrolysis oil including:
1. By distillation; distillation includes vacuum distillation, reactive distillation and extractive distillation so as to remove water in the bio-oil derived from biomass pyrolysis;
2. By esterification; the dehydrated bio-oil derived from biomass pyrolysis is catalyzed to decrease the acidity and viscosity thereof;
3. By hydrogenation; the biomass pyrolysis oil is hydrogenated and modified;

Among the above methods, distillation by heating can increase the viscosity of the bio-oil derived from biomass pyrolysis and results in agglomeration easily. In addition, bio-oil includes a few of low boiling point components, and the distillation may cause the loss of the low boiling point components and some organic azeotrope. Furthermore, the devices for catalytic hydrogenation are complex and expensive, and during the production process, the reactor tends to be blocked and the catalyst tends to deactivate. US 2012/020344 discloses a process for modifying bio-oil derived from biomass pyrolysis.

### SUMMARY OF THE INVENTION

In view of the above-described problems, it is one objective of the invention to provide a method for modifying bio-oil derived from biomass pyrolysis. The physical and chemical properties of the modified bio-oil have been greatly improved.

To achieve the above objective, in accordance with one embodiment of the invention, there is provided a method for modifying bio-oil derived from biomass pyrolysis, the method comprising the following steps:
1) demulsification and stratification to remove water: adding an inorganic salt and an organic demulsifier into a bio-oil, a mass ratio of the inorganic salt to the bio-oil being between 1: 2000 and 1: 800, and a mass ratio of the organic demulsifier and the bio-oil being between 1:4000 and 1:1000; oscillating or stirring a resulting mixture, resting the resulting mixture until a lower layer is clarified and an oil-water interface is clear, to yield the lower layer being an aqueous solution and an upper layer being the bi5o-oil, and collecting the bio-oil;
2) modification of the bio-oil derived from biomass pyrolysis: employing a conventional catalytic cracking reactor for the catalytic cracking; a zeolite molecular sieve-loaded clay as a catalyst:
   a) aging the catalyst at a temperature of between 500 and 800°C for between 2 and 8 hours using 100% steam, to yield a modified catalyst; and
   b) adding the modified catalyst in the reactor, and injecting the bio-oil to the reactor using a piston pump; a ratio of the catalyst to the bio-oil being between 1:3 and 1:16, and allowing the bio-oil to react under a weight hourly space velocity (WHSV) of between 6 and 15 h⁻¹, a temperature of between 380 and 700°C, and a pressure between 0.1 and 0.8 megapascal.

In a class of this embodiment, the catalyst employed in 2) is selected from REY-type zeolite/clay, REUSY-type zeolite/clay, silicon-rich REUSY-type zeolite/clay, LREHY-type zeolite/clay, and ZSM-5-type zeolite/clay.

In a class of this embodiment, the inorganic salt comprises at least one of the following ions: Ca²⁺, Na⁺, K⁺, Al³⁺, Fe²⁺, NH⁴, Cl⁻, SO₄²⁻, and NO₃⁻.

In a class of this embodiment, the organic demulsifier used for demulsification and stratification to remove water is selected from: polyoxypropylene ether, polyoxylethylene ether, propylene glycol, and propanol.

In a class of this embodiment, the inorganic salt comprises at least one of the following ions: Na⁺, NH₄⁺, Cl⁻ , and SO₄²⁻.

In a class of this embodiment, the mass ratio of the inorganic salt to the bio-oil is between 1:1500 and 1:1000; the mass ratio of the organic demulsifier to the bio-oil is between 1:2000 and 1:1300.

In a class of this embodiment, before aging the catalyst in 2), a corresponding performed catalyst is allowed to exchange ions with 1 mol/L of NH₄NO₃, and then is roasted at between 150 and 300°C for 2 to 4 hours to yield the modified catalyst having deoxygenation properties.

In a class of this embodiment, in 1), the resulting mixture is oscillated or stirred for 3 to 60 minutes, and then is allowed to rest for 20±5 minutes.

Compared with existing technologies, advantages of the method for modifying bio-oil derived from biomass pyrolysis according to embodiments of the invention are as follows:
1. Demulsifier and inorganic ions are employed for demulsification and stratification to remove water, thus oil-water separation can be realized under normal temperature, and thus water is removed. The demulsifier accelerates the oil-water separation, and the inorganic salt break the electric double layer of the emulsion, thus speeding up the stratification of water, meanwhile the hydrophilic-lipophilic balance of the emulsion is changed, thereby improving the oil-water separation effect. The oil-water separation is carried on at normal temperature so that the aging of the bio-oil is prevented.
2. Most of water in the bio-oil is removed by demulsification and stratification and oil-water separation, so the upper layer of the bio-oil has water content lower than 8% (mass ratio). Small amount of residual water can decrease the viscosity of the bio-oil, maintain a good fluidity and facilitate the material feeding.
3. The catalytic cracking reaction lasts a short time, so cracking can be carried on before the aging of the bio-oil, to produce stable short-chain hydrocarbons and cracking gas.
4. Modification of the catalyst, especially through ion exchange, can improve the acidity of the catalyst, improve the deoxygenation properties of the catalyst, and brings a more effective deoxygenation for bio-oil.
5. Modification of the catalyst can endow the catalyst with high activity and high deoxygenation properties, and oxygen in the bio-oil can be removed in the form of H₂O, CO or CO₂, without consumption of reducing gases.
6. The process is simple, the involved apparatus is cheap, and the cost is low, all of which facilitate large-scale applications of the method.

### DETAILED DESCRIPTION OF THE EMBODIMENTS

For further illustrating the invention, experiments detailing a method for modifying bio-oil derived from biomass pyrolysis are described below. It should be noted that the following examples are intended to describe and not to limit the invention.

In the examples, water content in bio-oil is tested by Karl Fischer titration (GB11146). Acidity of bio-oil is tested by Determination of acid number of Petroleum products (GB/T264-1991). Viscosity of bio-oil is tested by capillary viscometer. Low calorific value of bio-oil is tested by Heating Value Determination Method of Coal Water Slurry (GB/T18856). And elements C, H, O in bio-oil are tested by an elemental analyzer.

### Example 1

1000 g of bio-oil was placed in a 1500 mL three-necked flask, and then 0.5 g of sodium chloride and 0.25 g of polyoxypropylene ether were added with stirring. The bio-oil and the demulsifier were stirred for 5 minutes, and then the mixture was transferred to a separating funnel to rest for 20 minutes. When the lower layer which was an aqueous solution was clarified and the oil-water interface was clear, an upper layer which was bio-oil I was separated from the aqueous solution.

The performed silicon-rich REUSY/clay catalyst was added to an 80°C 1 mol/L of NH₄NO₃ solution, and was soaked for 6 hours. Then the catalyst was dried and roasted for 3 hours under 150°C. The catalyst was aged for 3 hours by 100% steam at 600°C. 200 g of catalyst was weighed and placed in a fixed fluidized bed, and the catalytic cracking was carried on under the following parameters: a Weight Hourly Space Velocity (WHSV): 6 h⁻¹; a ratio of the catalyst to the bio-oil: 8, a temperature: 450°C; and a pressure: 0.2 megapascal. An analysis result of the cracking product is shown as Table **1.**

**Table 1 Result of Catalytic Cracking of Bio-oil I (P=1 atm, T= 28°C)**

| | Yield wt. % | Physical and chemical properties | | | | Element analysis (%) | | |
|---|---|---|---|---|---|---|---|---|
| | | Content of water wt. % | Acidity mgKOH/100 mL | Kinematic viscosity mm²/s | Low calorific value MJ/kg | C | H | O |
| Bio-oil | - | 32.3 | 6965 | 16.5 | 12.3 | 47.03 | 6.78 | 44.92 |
| Dehydrated bio-oil | - | 23.4 | 6820 | 37.7 | 13.5 | 52.67 | 5.50 | 40.11 |
| Result after modification | 75.5 | - | 370 | 16.9 | 20.6 | 60.65 | 6.97 | 30.75 |

### Example 2

1000 g of bio-oil was placed in a 1500 mL three-necked flask, and then 1 g of sodium sulphate and 1 g of propylene glycol were added with stirring. The bio-oil and the demulsifier were stirred for 5 minutes, and then the mixture was transferred to a separating funnel to rest for 20 minutes. When the lower layer which was an aqueous solution was clarified and the oil-water interface was clear, an upper layer which was bio-oil II was separated from the aqueous solution.

The performed REY/clay catalyst was added to an 80°C 1 mol/L of NH₄NO₃ solution, and was soaked for 6 hours. Then the catalyst was dried and roasted for 4 hours under 300°C. The catalyst was aged for 5 hours by 100% steam at 800°C. 200 g of catalyst was weighed and placed in a fixed fluidized bed, and the catalytic cracking was carried on under the following parameters: a Weight Hourly Space Velocity (WHSV): 10 h⁻¹; a ratio of the catalyst to the bio-oil: 8; a temperature: 550°C; and a pressure: 0.3 megapascal. An analysis result of the cracking product is shown as Table **2.**

**Table 2 Result of Catalytic Cracking of Bio-oil II (P=1 atm, T= 28°C)**

| | Yield wt. % | Physical and chemical properties | | | | Element analysis (%) | | |
|---|---|---|---|---|---|---|---|---|
| | | Content of water wt. % | Acidity mgKOH/100 mL | Kinematic viscosity mm²/s | Low calorific value MJ/kg | C | H | O |
| Bio-oil | - | 32.3 | 6965 | 16.5 | 12.3 | 47.03 | 6.78 | 44.92 |
| Dehydrated bio-oil | - | 7.5 | 6621 | 152.8 | 21.5 | 60.59 | 5.22 | 31.59 |
| Result after modification | 90.7 | - | 352 | 17.4 | 30.7 | 70.82 | 8.64 | 19.89 |

### Example 3

1000 g of bio-oil was placed in a 1500 mL three-necked flask, and then 0.6 g of sodium chloride and 0.3 g of polyoxypropylene ether were added with stirring. The bio-oil and the demulsifier were stirred for 5 minutes, and then the mixture was transferred to a separating funnel to rest for 20 minutes. When the lower layer which was an aqueous solution was clarified and the oil-water interface was clear, an upper layer which was bio-oil III was separated from the aqueous solution.

The performed silicon-rich REUSY/clay catalyst was added to an 80°C 1 mol/L of NH₄NO₃ solution, and was soaked for 6 hours. Then the catalyst was dried and roasted for 3 hours under 150°C. The catalyst was aged for 3 hours by 100% steam at 600°C. 200 g of catalyst was weighed and placed in a fixed fluidized bed, and the catalytic cracking was carried on under the following parameters: a Weight Hourly Space Velocity (WHSV): 6 h⁻¹; a ratio of the catalyst to the bio-oil: 8; a temperature: 450°C; and a pressure: 0.2 megapascal. An analysis result of the cracking product is shown as Table **3.**

**Table 3 Result of Catalytic Cracking of Bio-oil III (P=1 atm, T= 28°C)**

| | Yield wt. % | Physical and chemical properties | | | | Element analysis (%) | | |
|---|---|---|---|---|---|---|---|---|
| | | Content of water wt. % | Acidity mgKOH/100 mL | Kinematic viscosity mm²/s | Low calorific value MJ/kg | C | H | O |
| Bio-oil | - | 32.3 | 6965 | 16.5 | 12.3 | 47.03 | 6.78 | 44.92 |
| Dehydrated bio-oil | - | 18.4 | 6753 | 107.5 | 17.6 | 59.77 | 5.66 | 33.13 |
| Result after modification | 86.5 | - | 374 | 15.7 | 25.3 | 65.05 | 7.97 | 23.35 |

### Example 4

1000 g of bio-oil was placed in a 1500 mL three-necked flask, and then 0.5 g of ammonium sulfate and 0.5 g of polyoxylethylene ether are added with stirring. The bio-oil and the demulsifier were stirred for 8 minutes, and then the mixture was transferred to a separating funnel to rest for 20 minutes. When the lower layer which was an aqueous solution was clarified and the oil-water interface was clear, an upper layer which was bio-oil IV was separated from the aqueous solution.

The performed REUSY/clay catalyst was added to an 80°C 1 mol/L of NH₄NO₃ solution, and was soaked for 6 hours. Then the catalyst was dried and roasted for 2 hours under 200°C. The catalyst was aged for 6 hours by 100% steam of 700°C. 200 g of catalyst was weighed and placed in the riser reactor, and the catalytic cracking was carried on under the following parameters: a Weight Hourly Space Velocity (WHSV): 15 h⁻¹; a ratio of the catalyst to the bio-oil: 3; a temperature: 550°C; and a pressure: 0.3 megapascal. An analysis result of the cracking product is shown as Table **4.**

**Table 4 Result of Catalytic Cracking of Bio-oil IV (P=1 atm, T= 28°C)**

| | Yield wt. % | Physical and chemical properties | | | | Element analysis (%) | | |
|---|---|---|---|---|---|---|---|---|
| | | Content of water wt. % | Acidity mgKOH/100 mL | Kinematic viscosity mm²/s | Low calorific value MJ/kg | C | H | O |
| Bio-oil | - | 32.3 | 6965 | 16.5 | 12.3 | 47.03 | 6.78 | 44.92 |
| Dehydrated bio-oil | - | 8.3 | 6794 | 145.5 | 19.7 | 61.78 | 5.50 | 31.56 |
| Result after modification | 80.7 | - | 362 | 14.6 | 28.2 | 70.73 | 7.34 | 19.63 |

### Example 5

1000 g of bio-oil was placed in a 1500 mL three-necked flask, and then 0.5 g of sodium sulphate and 0.7 g of propylene glycol were added with stirring. The bio-oil and the demulsifier were stirred for 5 minutes, and then the mixture was transferred to a separating funnel to rest for 20 minutes. When the lower layer which was an aqueous solution was clarified and the oil-water interface was clear, an upper layer which was bio-oil V was separated from the aqueous solution.

The performed REY/clay catalyst was added to an 80°C 1 mol/L of NH₄NO₃ solution, and was soaked for 6 hours. Then the catalyst was dried and roasted for 4 hours under 300°C. The catalyst was aged for 5 hours by 100% steam at 800°C. 200 g of catalyst was weighed and placed in a fixed fluidized bed, and the catalytic cracking was carried on under the following parameters: a Weight Hourly Space Velocity (WHSV): 10 h⁻¹; a ratio of the catalyst to the bio-oil: 8, a temperature: 550°C; and a pressure: 0.3 megapascal. An analysis result of the cracking product is shown as Table **5.**

**Table 5 Result of Catalytic Cracking of Bio-oil V (P=1 atm, T= 28°C)**

| | Yield wt. % | Physical and chemical properties | | | | Element analysis (%) | | |
|---|---|---|---|---|---|---|---|---|
| | | Content of water wt. % | Acidity mgKOH/100 mL | Kinematic viscosity mm²/s | Low calorific value MJ/kg | C | H | O |
| Bio-oil | - | 32.3 | 6965 | 16.5 | 12.3 | 47.03 | 6.78 | 44.92 |
| Dehydrated bio-oil | - | 8.7 | 6821 | 144.7 | 19.3 | 61.25 | 5.53 | 31.86 |
| Result after modification | 82.5 | - | 362 | 14.4 | 28.7 | 69.73 | 8.04 | 20.91 |

### Example 6

1000 g of bio-oil was placed in a 1500 mL three-necked flask, and then 1.2 g of calcium chloride and 0.3 g of propanol were added with stirring. The bio-oil and the demulsifier were stirred for 5 minutes, and then the mixture was transferred to a separating funnel to rest for 20 minutes. When the lower layer which was an aqueous solution was clarified and the oil-water interface was clear, an upper layer which was bio-oil VI was separated from the aqueous solution.

The performed LREHY/clay catalyst was added to an 80°C 1 mol/L of NH₄NO₃ solution, and was soaked for 6 hours. Then the catalyst was dried and roasted for 2 hours under 200°C. The catalyst was aged for 8 hours by 100% steam of 500°C. 200 g of catalyst was weighed and placed in a fixed fluidized bed, and the catalytic cracking was carried on under the following parameters: a Weight Hourly Space Velocity (WHSV): 15 h⁻¹; a ratio of the catalyst to the bio-oil: 12; a temperature: 600°C; and a pressure: 0.3 megapascal. An analysis result of the cracking product is shown as Table **6.**

**Table 6 Result of Catalytic Cracking of Bio-oil VI (P=1 atm, T= 28°C)**

| | Yield wt. % | Physical and chemical properties | | | | Element analysis (%) | | |
|---|---|---|---|---|---|---|---|---|
| | | Content of water wt. % | Acidity mgKOH/100 mL | Kinematic viscosity mm²/s | Low calorific value MJ/kg | C | H | O |
| Bio-oil | - | 32.3 | 6965 | 16.5 | 12.3 | 47.03 | 6.78 | 44.92 |
| Dehydrated bio-oil | - | 8.1 | 7017 | 146.4 | 20.2 | 61.57 | 5.49 | 31.41 |
| Result after modification | 78.6 | - | 347 | 13.3 | 29.5 | 72.27 | 7.89 | 18.49 |

### Example 7

1000 g of bio-oil was placed in a 1500 mL three-necked flask, and then 0.8 g of sodium chloride and 0.4 g of polyoxylethylene ether were added with stirring. The bio-oil and the demulsifier were stirred for 8 minutes, and then the mixture was transferred to a separating funnel to rest for 20 minutes. When the lower layer which was an aqueous solution was clarified and the oil-water interface was clear, an upper layer which was bio-oil VII was separated from the aqueous solution.

The performed silicon-rich REUSY/clay catalyst was added to an 80°C 1 mol/L of NH₄NO₃ solution, and was soaked for 6 hours. Then the catalyst was dried and roasted for 3 hours under 150°C. The catalyst was aged for 3 hours by 100% steam at 600°C. 200 g of catalyst was weighed and placed in the riser reactor, and the catalytic cracking was carried on under the following parameters: a Weight Hourly Space Velocity (WHSV): 12 h⁻¹; a ratio of the catalyst to the bio-oil: 16; a temperature: 650°C; and a pressure: 0.5 megapascal. An analysis result of the cracking product is shown as Table **7.**

**Table 7 Result of Catalytic Cracking of Bio-oil VII (P=1 atm, T= 28°C)**

| | Yield wt. % | Physical and chemical properties | | | | Element analysis (%) | | |
|---|---|---|---|---|---|---|---|---|
| | | Content of water wt. % | Acidity mgKOH/ 100 mL | Kinematic viscosity mm²/s | Low calorific value MJ/kg | C | H | O |
| Bio-oil | - | 32.3 | 6965 | 16.5 | 12.3 | 47.03 | 6.78 | 44.92 |
| Dehydrated bio-oil | - | 15.7 | 6926 | 116.4 | 18.2 | 59.89 | 5.22 | 31.61 |
| Result after modification | 74.2 | - | 309 | 12.4 | 32.7 | 75.55 | 7.37 | 15.72 |

### Example 8

1000 g of bio-oil was placed in a 1500 mL three-necked flask, and then 0.8 g of sodium chloride and 0.6 g of polyoxypropylene ether were added with stirring. The bio-oil and the demulsifier were stirred for 8 minutes, and then the mixture was transferred to a separating funnel to rest for 20 minutes. When the lower layer which was an aqueous solution was clarified and the oil-water interface was clear, an upper layer which was bio-oil VIII was separated from the aqueous solution.

The performed ZSM-5/clay catalyst was added to an 80°C 1 mol/L of NH₄NO₃ solution, and was soaked for 6 hours. Then the catalyst was dried and roasted for 3 hours under 150°C. The catalyst was aged for 2 hours by 100% steam of 500°C. 200 g of catalyst was weighed and placed in a fixed fluidized bed, and the catalytic cracking was carried on under the following parameters: a Weight Hourly Space Velocity (WHSV): 12 h⁻¹; a ratio of the catalyst to the bio-oil: 16; a temperature: 650°C; and a pressure: 0.5 megapascal. An analysis result of the cracking product is shown as Table **8.**

**Table 8 Result of Catalytic Cracking of Bio-oil VIII (P=1 atm, T= 28°C)**

| | Yield wt. % | Physical and chemical properties | | | | Element analysis (%) | | |
|---|---|---|---|---|---|---|---|---|
| | | Content of water wt. % | Acidity mgKOH/ 100 mL | Kinematic viscosity mm²/s | Low calorific value MJ/kg | C | H | O |
| Bio-oil | - | 32.3 | 6965 | 16.5 | 12.3 | 47.03 | 6.78 | 44.92 |
| Dehydrated bio-oil | - | 14.9 | 6875 | 126.7 | 18.6 | 60.61 | 5.28 | 31.60 |
| Result after modification | 75.3 | - | 286 | 10.8 | 33.9 | 81.73 | 7.41 | 8.85 |

1. As seen from the examples, within the scope of this invention, as the mass ratio between the inorganic ions and the bio-oil, and the mass ratio between the organic demulsifier and the bio-oil become larger, dehydration of the bio-oil gets obvious. This is because mass penalty of the inorganic salt can break the electrical double layers at the oil/water interface, increase the aqueous phase and the polarity thereof, thereby improving oil-water separation; the mass penalty of the organic demulsifier can shorten the time of the oil-water separation.

2. As the acid sites of the performed catalyst are small and unevenly distributed, the deoxygenation properties of the catalyst are weak, and the catalyst gets inactive easily. The ion exchange with the 1 mol/L of NH₄NO₃ can obviously increase the acid sites and evenly distribute the acid sites in the catalyst, thereby improving the deoxygenation properties of the catalyst.

## Claims

1. A method for modifying bio-oil derived from biomass pyrolysis, the method comprising:
1) demulsification and stratification to remove water: adding an inorganic salt and an organic demulsifier to a bio-oil, a mass ratio of the inorganic salt to the bio-oil being between 1: 2000 and 1: 800, and a mass ratio of the organic demulsifier and the bio-oil being between 1:4000 and 1:1000; oscillating or stirring a resulting mixture, resting the resulting mixture, to yield a lower layer being an aqueous solution and an upper layer being the bio-oil, and collecting the bio-oil;
2) modification of the bio-oil derived from biomass pyrolysis: employing a conventional catalytic cracking reactor for a catalytic cracking; a zeolite molecular sieve-loaded clay as a catalyst;
a) aging the catalyst at a temperature of between 500 and 800°C for between 2 and 8 hours using 100% steam, to yield a modified catalyst; and
b) adding certain amount of modified catalyst in the reactor, and injecting the bio-oil in the reactor using a piston pump; a ratio of the catalyst to the bio-oil being between 1:3 and 1:16, and allowing the bio-oil to react under a weight hourly space velocity (WHSV) of between 6 and 15 h⁻¹, a temperature of between 380 and 700°C, and a pressure between 0.1 and 0.8 megapascal.

2. The method of claim 1, wherein the catalyst employed in 2) is selected from REY-type zeolite/clay, REUSY-type zeolite/clay, silicon-rich REUSY-type zeolite/clay, LREHY-type zeolite/clay, and ZSM-5-type zeolite/clay.

3. The method of claim 1 or 2, wherein the inorganic salt used for the demulsification and stratification to remove water comprises at least one of the following ions: Ca²⁺, Na⁺, K⁺, Al³⁺, Fe²⁺, NH₄⁺, Cl⁻, SO₄²⁻ and NO₃⁻.

4. The method of claim 1 or 2, wherein the organic demulsifier used for the demulsification and stratification to remove water is selected from: polyoxypropylene ether, polyoxylethylene ether, propylene glycol, and propanol.

5. The method of claim 1 or 2, wherein the inorganic salt used for the demulsification and stratification to remove water comprises at least one of the following: Na⁺, NH₄⁺, Cl⁻, and SO₄²⁻.

6. The method claim 1 or 2, wherein the mass ratio of the inorganic salt to the bio-oil is between 1:1500 and 1:1000; the mass ratio of the organic demulsifier to the bio-oil is between 1:2000 and 1:1300.

7. The method of claim 1 or 2, wherein before aging the catalyst in 2), a corresponding performed catalyst is allowed to exchange ions with 1 mol/L of NH₄NO₃, and then is roasted at between 150 and 300°C for 2 to 4 hours to yield the modified catalyst having deoxygenation properties.

8. The method of claim 3, wherein before aging the catalyst in 2), a corresponding performed catalyst is allowed to exchange ions with 1 mol/L of NH₄NO₃, and then is roasted at between 150 and 300°C for 2 to 4 hours to yield the modified catalyst having deoxygenation properties.

9. The method of claim 4, wherein before aging the catalyst in 2), a corresponding performed catalyst is allowed to exchange ions with 1 mol/L of NH₄NO₃, and then is roasted at between 150 and 300°C for 2 to 4 hours to yield the modified catalyst having deoxygenation properties.

10. The method of claim 1 or 2, wherein in 1), the resulting mixture is oscillated or stirred for 3 to 60 minutes, and then is allowed to rest for 20±5 minutes.

## Patentansprüche

1. Verfahren zur Modifizierung eines aus der Biomassepyrolyse gewonnenen Bio-Öls, wobei das Verfahren Folgendes umfasst:
1) Demulgierung und Stratifizierung zur Entfernung von Wasser: Zugabe eines anorganischen Salzes und eines organischen Demulgators zu einem Bio-Öl, wobei das Massenverhältnis des anorganischen Salzes zu dem Bio-Öl zwischen 1:2000 und 1:800 liegt und das Massenverhältnis des organischen Demulgators zu dem Bi-Öl zwischen 1:4000 und 1:1000 liegt; Oszillieren oder Rühren des resultierenden Gemischs, Ruhenlassen des resultierenden Gemischs, wodurch sich eine untere Schicht bildet, die eine wässrige Lösung darstellt und eine obere Schicht, die das Bio-Öl darstellt, und Sammeln des Bio-Öls;
2) Modifizierung des aus der Biomassepyrolyse gewonnenen Bio-Öls: Einsetzen eines konventionellen katalytischen Crackreaktors zum katalytischen Cracken; eines Zeolith-Molekularsieb-beladenen Tons als Katalysator;
a) Altern des Katalysators bei einer Temperatur zwischen 500 und 800 °C über 2 bis 8 Stunden unter Verwendung von 100% Dampf, wodurch ein modifizierter Katalysator erhalten wird; und
b) Zugeben einer bestimmten Menge an modifiziertem Katalysator in den Reaktor und Einspritzen des Bio-Öls in den Reaktor unter Verwendung einer Kolbenpumpe; wobei das Verhältnis des Katalysators zum Bio-Öl zwischen 1:3 und 1:16 liegt; und Umsetzen des Bio-Öls bei einer massenbezogenen Raumgeschwindigkeit (WHSV) zwischen 6 und 15 h⁻¹, einer Temperatur zwischen 380 und 700 °C und einem Druck zwischen 0,1 und 0,8 Megapascal.

2. Verfahren nach Anspruch 1, wobei der in 2) verwendete Katalysator ausgewählt wird aus Zeolith/Ton vom REY-Typ, Zeolith/Ton vom REUSY-Typ, siliziumreichem Zeolith/Ton vom REUSY-Typ, Zeolith/Ton vom LREHY-Typ und Zeolith/Ton vom ZSM-5-Typ.

3. Verfahren nach Anspruch 1 oder 2, wobei das für die Demulgierung und Stratifizierung zur Entfernung von Wasser verwendete anorganische Salz mindestens eines der folgenden Ionen umfasst: Ca²⁺, Na⁺, K⁺, Al³⁺, Fe²⁺, NH₄⁺, Cl⁻, SO₄²⁻ und NO₃⁻.

4. Verfahren nach Anspruch 1 oder 2, wobei der für die Demulgierung und Stratifizierung zur Entfernung von Wasser verwendete organische Demulgator ausgewählt wird aus: Polyoxypropylenether, Polyoxyethylenether, Propylenglycol und Propanol.

5. Verfahren nach Anspruch 1 oder 2, wobei das für die Demulgierung und Stratifizierung zur Entfernung von Wasser verwendete anorganische Salz mindestens eines der folgenden umfasst: Na⁺, NH₄⁺, Cl⁻ und SO₄²⁻.

6. Verfahren nach Anspruch 1 oder 2, wobei das Massenverhältnis des anorganischen Salzes zum Bio-Öl zwischen 1:1500 und 1:1000 liegt; das Massenverhältnis des organischen Demulgators zum Bio-Öl zwischen 1:2000 und 1:1300 liegt.

7. Verfahren nach Anspruch 1 oder 2, wobei man vor dem Altern des Katalysators in 2) einen entsprechend aufgeführten Katalysator Ionen mit 1 mol/L NH₄NO₃ austauschen lässt und diesen dann 2 bis 4 Stunden lang zwischen 150 und 300 °C röstet, wodurch der modifizierte Katalysator mit Desoxygenierungseigenschaften erhalten wird.

8. Verfahren nach Anspruch 3, wobei man vor dem Altern des Katalysators in 2) einen entsprechend ausgebildeten Katalysator Ionen mit 1 mol/L NH₄NO₃ austauschen lässt und diesen dann 2 bis 4 Stunden lang zwischen 150 und 300 °C röstet, wodurch der modifizierte Katalysator mit Desoxygenierungseigenschaften erhalten wird.

9. Verfahren nach Anspruch 4, wobei man vor dem Altern des Katalysators in 2) einen entsprechend aufgeführten Katalysator Ionen mit 1 mol/L NH₄NO₃ austauschen lässt und diesen dann 2 bis 4 Stunden lang bei 150 bis 300 °C röstet, wodurch der modifizierte Katalysator mit Desoxygenierungseigenschaften erhalten wird.

10. Verfahren nach Anspruch 1 oder 2, wobei in 1) das resultierende Gemisch 3 bis 60 Minuten lang oszilliert oder gerührt wird und dann 20 ± 5 Minuten ruhen gelassen wird.

## Revendications

1. Procédé de modification de la bio-huile dérivée de la pyrolyse de biomasse, le procédé comprenant :
1) la désémulsification et la stratification pour éliminer l'eau : l'ajout d'un sel inorganique et un désémulsifiant organique à une bio-huile, un rapport massique du sel inorganique à la bio-huile étant compris entre 1:2000 et 1:800, et un rapport massique du désémulsionnant organique et de la bio-huile étant compris entre 1:4000 et 1:1000 ; l'oscillation ou le mélange d'un mélange résultant, le repos du mélange résultant, pour obtenir une couche inférieure étant une solution aqueuse et une couche supérieure étant la bio-huile, et la collecte de la bio-huile ;
2) la modification de la bio-huile dérivée de la pyrolyse de biomasse : l'emploi d'un réacteur de craquage catalytique conventionnel pour un craquage catalytique ; une argile chargée de tamis moléculaire à base de zéolithe en tant que catalyseur ;
a) le vieillissement du catalyseur à une température comprise entre 500 et 800 °C pendant entre 2 et 8 heures en utilisant 100 % de vapeur, pour donner un catalyseur modifié ; et
b) l'ajout d'une certaine quantité de catalyseur modifié dans le réacteur, et l'injection de la bio-huile dans le réacteur en utilisant une pompe à piston, un rapport du catalyseur à la bio-huile étant compris entre 1:3 et 1:16, et permettre à la bio-huile de réagir à une vitesse spatiale d'horaire en poids (WHSV) comprise entre 6 et 15 h⁻¹, une température comprise entre 380 et 700 °C, et une pression comprise entre 0,1 et 0,8 mégapascal.

2. Procédé selon la revendication 1, dans lequel le catalyseur employé en 2) est choisi parmi la zéolithe/argile de type REY, la zéolithe/argile de type REUSY, la zéolithe/argile de type REUSY riche en silicium, la zéolithe/argile de type LREHY, et la zéolithe/argile de type ZSM-5.

3. Procédé selon la revendication 1 ou la revendication 2, dans lequel le sel inorganique utilisé pour la désémulsification et la stratification pour éliminer l'eau comprend au moins un des ions suivants : Ca²⁺, Na⁺, K⁺, Al³⁺, Fe²⁺, NH₄⁺, Cl⁻, SO₄²⁻, et NO₃⁻.

4. Procédé selon la revendication 1 ou la revendication 2, dans lequel le désémulsifiant organique utilisé pour la désémulsification et la stratification pour éliminer l'eau est choisi parmi : l'éther de polyoxypropylène, l'éther de polyoxyéthylène, le propylène glycol, et le propanol.

5. Procédé selon la revendication 1 ou la revendication 2, dans lequel le sel inorganique utilisé pour la désémulsification et la stratification pour éliminer l'eau comprend au moins un des ions suivants : Na⁺, NH₄⁺, Cl⁻ et SO₄²⁻.

6. Procédé selon la revendication 1 ou la revendication 2, dans lequel le rapport massique du sel inorganique à la bio-huile est compris entre 1:1500 et 1:1000 ; le rapport massique du désémulsifiant organique à la bio-huile est compris entre 1:2000 et 1:1300.

7. Procédé selon la revendication 1 ou la revendication 2, dans lequel avant le vieillissement du catalyseur en 2), on permet à un catalyseur utilisé correspondant d'échanger des ions avec 1 mol/L de NH₄NO₃, et ensuite d'être grillé à une température comprise entre 150 et 300 °C pendant 2 à 4 heures pour donner le catalyseur modifié possédant des propriétés de désoxygénation.

8. Procédé selon la revendication 3, dans lequel avant le vieillissement du catalyseur en 2), on permet à un catalyseur utilisé correspondant d'échanger des ions avec 1 mol/L de NH₄NO₃, et ensuite d'être grillé à une température comprise entre 150 et 300 °C pendant 2 à 4 heures pour donner le catalyseur modifié possédant des propriétés de désoxygénation.

9. Procédé selon la revendication 4, dans lequel avant le vieillissement du catalyseur en 2), on permet à un catalyseur utilisé correspondant d'échanger des ions avec 1 mol/L de NH₄NO₃, et ensuite d'être grillé à une température comprise entre 150 et 300 °C pendant 2 à 4 heures pour donner le catalyseur modifié possédant des propriétés de désoxygénation.

10. Procédé selon la revendication 1 ou la revendication 2, dans lequel en 1), le mélange résultant est soumis à des oscillations ou est mélangé pendant de 3 à 60 minutes, et on le laisse ensuite se reposer pendant 20±5 minutes.
